# EUROPEAN PATENT APPLICATION

(11) **EP 0 551 751 A1**
(43) Date of publication of application: **21.07.1993**
(21) Application number: 92311565.3
(22) Date of filing: 17.12.1992
(51) Int. Cl.: H04N 7/087, H04N 5/60, H04N 7/04, H04N 7/00

(54) **Muse audio decoder and muse transmission system**

(30) Priority: 13.01.1992 JP 4221/92
(71) Applicant: PIONEER ELECTRONIC CORPORATION, Meguro-ku Tokyo-to (JP)
(72) Inventor: Todoroki, Ryuichi, c/o Pioneer Electronic Corp., 4-chome, Tokorozawa-shi, Saitama-ken (JP)
(74) Representative: Brunner, Michael John

(57) **Abstract**

A MUSE audio decoder (5) decodes an audio signal contained in a MUSE signal. The MUSE audio decoder includes: a multiplexing-period bit de-interleave processing unit (11); a synchronism-state detection unit (100) for detecting an out-of-synchronism state of an audio frame at a previous stage of the multiplexing-period bit de-interleave processing unit; and a sound output suppressing unit (16) for suppressing the amplitude of an output audio signal of the MUSE audio decoder on the basis of a detection output signal of the synchronism-state detection unit.

## Description

This invention relates to a MUSE (Multiple Sub-Nyquist Sampling Encoding) transmission type of audio decoder and a MUSE transmission system which are used for transmission of high-precision television signals.

### 2. Description of the Related Art

A high-vision broadcasting is a television broadcasting for a highly-minute picture. In the high-vision broadcasting, the screen of a television image receiver is so designed as to be laterally more lengthened in an aspect ratio of 16:9, and the number of scanning lines thereof is set to 1125. Therefore, this high-vision broadcasting is performed using a broadcasting system for transmitting a highly-minute television signal whose transmission standard is quite different from the conventional NTSC (National Television System Committee) system.

A high-vision signal is transmitted to each viewer through a BS (Broadcasting Satellite). The high-vision signal requires a transmission band which is five times or more as broad as that of a currently-used television broadcasting, and thus the high-vision signal itself can not be transmitted with the band width of one channel of the BS without being modified. A MUSE system is a signal band compression system for enabling the transmission of the high-vision signal from the BS. The MUSE system is disclosed in detail in "DEVELOPMENT OF MUSE SYSTEM" by NHK (Japanese Broadcasting Association) technical institute, Vol. 39, No. 2. Ser. NO. 172 in 1987, and "HIGH-VISION SATELLITE TRANSMISSION SYSTEM - MUSE -" in Papers of Television Society (in Japan), Vol. 42, No. 5 in 1988.

In the MUSE system, a high-vision signal is multiplexingly sub-sampled to be compressed into a transmission band of 8.1 MHz, and then it is transmitted in the analog form. The signal whose band is compressed in this manner, is called as "MUSE signal".

The MUSE transmission system for transmitting a high-vision signal is constructed by a MUSE encoder located at a transmission side and a MUSE decoder located at a reception side. The MUSE signal is transmitted from the transmission side, and is received by the MUSE decoder side. The received MUSE signal is passed through a low-pass filter so that a high-frequency noise is removed, and is then subjected to A/D conversion. The digitalized MUSE signal is subjected to a decoding processing. Then, R, G and B high-vision video signals are finally outputted by the MUSE decoder. On the other hand, the digitalized MUSE signal is also subjected to an operation of separating (extracting) audio/independent data contained in the MUSE signal. The extracted data is then transmitted to an audio decoder so as to output an output audio signal.

In this kind of MUSE audio decoder, the audio/independent signal is converted into a certain sampling frequency, and then it is subjected to a ternary level judgment. That is, since the audio signal to be transmitted is converted to a ternary sample in the encoder at the transmission side to lower a sample transmission rate, the level judgement is made to enable a ternary/binary conversion process. The output data of the ternary level judgment process is converted into a binary data on the basis of a predetermined conversion rule, and then is supplied to a time-axis expanding process. Since the audio/independent data is compressed on time axis in the encoder at the transmission side so as to be accommodated within a vertical retrace line period to perform the multiplexing thereof to the video signal, it is restored to the original audio/independent transmission rate through the converse process. The time-axis expanded output data is subjected to a de-interleave process between audio frames within a multiplexing period, and is then supplied to an error control decode process to further conduct the de-interleave processing within one frame of the audio/independent data to perform error detection, correction and amendment for the audio/independent data. The de-interleave processing is a processing reverse to the interleave processing. The interleave processing is a processing of changing the order of data when an error correction code relevant to a signal data is inserted so that burst error control of the audio/independent data at the encoder side can be performed. Thus error controlled data is then subjected to a near-instantaneous compressing and expanding process so as to decode an audio data which has been subjected to DANCE (Differential PCM Audio Near-instantaneous Compressing and Expanding), that is, which has been converted to a near-instantaneous compressed and expanded difference code. The DANCE is a method of performing the near-instantaneous compression and expansion using an audio-sensitive characteristic, as well as the band compression having no signal deterioration, on the basis of the correlation of an acoustic signal. The output data of the near-instantaneous compressing and expanding process, is then D/A-converted. That is to say, the analog signal is converted to the audio/independent data which has been subjected to the above processings, and output the converted analog signal.

Accordingly, the D/A converted sound data (the amplitude of an output audio signal) is subjected to a suppressing process in at least the following cases.
(1) A case where the frame synchronism of the MUSE signal is out of step (out of synchronism).
(2) A case where the audio frame is out of step (out of synchronism).
(3) A case where the suppression of the output sound is indicated by the 16th bit of an audio frame control code.

In the cases (1) and (2), a noise occurs in the output sound, and thus it is required to be suppressed. The case (3) corresponds to a case where a sound mode in the broadcast is switched.

In the cases (1) and (2), the suppressing operation of the output sound is usually carried out when the out-of-step (out-of-synchronism) continuously occurs over plural frames, in order to prevent the circuit from excessively sensitively responding to an instantaneous out-of-synchronism which is caused by a transmission noise, etc.

However, in the output sound suppressing control method of the above mentioned MUSE audio decoder, there occurs a case where a sufficient effect can not be obtained and an undesired noise is unintentionally output.

For example, such a case corresponds to a case where a MUSE decoder is connected to a player for a video disk which has been recorded by the MUSE system, and a special reproduction is carried out to the vide disk. Through the operation of the video disk player, a frame still function can be easily realized by repetitively outputting reproducing MUSE signals of four fields to the MUSE decoder. In this case, since the audio signal multiplexed to the MUSE signal is discontinuously output, it is desirable to suppress the output sound. However, in the above mentioned MUSE audio decoder, this case does not correspond to any one of the cases (1), (2) and (3) as described above, so that no suppression is conducted on the sound output.

In order to match this case to the case (2) so as to conduct the suppression thereof, the output operation of the player may be controlled such that the MUSE signal lacks the audio frame synchronizing signal. However, sufficient sound output suppression can not be expected by only this method for the following reason. In the above mentioned MUSE audio decoder, since the detection of the audio frame synchronism is carried out after the multiplexed audio/independent data is separated from the input MUSE signal and both of the time-axis expanding processing of the MUSE signal from the transmission clock (frequency of 16.2 MHz, for example) to the audio signal transmission clock (frequency of 1.35 MHz, for example) and the bit de-interleave processing within the multiplexing period are carried out, even if at this stage the deviation of the audio frame synchronism (i.e. out-of-synchronism of the audio frame) over plural frames is detected to suppress the output sound, a part of an undesired audio signal to be suppressed has been already output.

On the other hand, in order to match this case to the case (3) so as to conduct the suppression thereof, the 16th bit of the audio frame control code on a player output MUSE signal is required to be set to "1". However, in order to satisfy this requirement, circuits for performing the re-multiplexing of the audio/independent data to the MUSE signal, containing a multiplexing-period interleave circuit, a binary/ternary conversion circuit, etc., are required inside of the player, so that the whole circuit construction must be designed in large scale, and this is difficult to be realized.

It is therefore an object of the present invention to provide a MUSE decoder and a MUSE transmission system in which a noise output can be surely prevented.

According to the present invention, the above mentioned object can be achieved by a first MUSE audio decoder for decoding an audio signal contained in a MUSE signal. The first MUSE audio decoder includes: a multiplexing-period bit de-interleave processing unit; a synchronism-state detection unit for detecting an out-of-synchronism state of an audio frame at a previous stage of the multiplexing-period bit de-interleave processing unit; and a sound output suppressing unit for suppressing the amplitude of an output audio signal of the MUSE audio decoder on the basis of a detection output signal of the synchronism-state detection unit.

According to the present invention, the above mentioned object can be also achieved by a first MUSE transmission system. The first MUSE transmission system includes: a MUSE signal output device for outputting a MUSE signal in which at least audio frame synchronizing signal is removed from an audio/independent data of the MUSE signal during a period required for suppression of the amplitude of an audio signal contained in the MUSE signal; and the above mentioned first MUSE audio decoder of the present invention.

According to the present invention, the above mentioned object can be also achieved by a second MUSE audio decoder for decoding an audio signal contained in a MUSE signal. The second MUSE audio decoder includes: a time-axis expansion processing unit; a synchronism-state detection unit for detecting an out-of-synchronism state of an audio frame at a previous stage of the time-axis expansion processing unit; and a sound output suppressing unit for suppressing the amplitude of an output audio signal of the MUSE audio decoder on the basis of a detection output signal of the synchronism-state detection unit.

According to the present invention, the above mentioned object can be also achieved by a second MUSE transmission system. The second MUSE transmission system includes: a MUSE signal output device for outputting a MUSE signal in which at least audio frame synchronizing signal is removed from an audio/independent data in the MUSE signal during a period required for suppression of the amplitude of an audio signal contained in the MUSE signal; and the above mentioned second MUSE audio decoder of the present invention.

According to the present invention, the above mentioned object can be also achieved by a third MUSE audio decoder for decoding an audio signal contained in a MUSE signal. The third MUSE audio decoder includes: a ternary/binary conversion unit; an invalid-signal detection unit for detecting that a ternary pattern signal which is not defined in a ternary/binary conversion rule continuously appears over a predetermined period at a previous stage of the ternary/binary conversion unit; and a sound output suppressing unit for suppressing the amplitude of an output audio signal of the MUSE audio decoder on the basis of a detection output signal of the invalid-signal detection unit.

According to the present invention, the above mentioned object can be also achieved by a third MUSE transmission system. The third MUSE transmission system includes: a MUSE signal output device for outputting as a gray level a signal level of an audio/independent data portion in a MUSE signal during a period required for suppression of the amplitude of an audio signal contained in the MUSE signal; and the above mentioned third MUSE audio decoder of the present invention.

In the first MUSE audio decoder of the present invention, in order to judge at an early stage whether the suppression of the sound output is necessary or not and in order to perform a control operation to prevent the output of a noise to be suppressed, the state of the audio frame synchronism is monitored at the previous stage of the multiplexing-period bit de-interleave processing which requires a relatively long processing time, and the suppression of the sound output is carried out in accordance with the monitored state to prevent the output of the noise.

In the first MUSE transmission system of the present invention, the output device of the MUSE signal is controlled to perform such an output operation with respect to the MUSE audio decoder that at least audio frame synchronizing signal lacks in the audio/independent data portion of the MUSE signal during a period when the audio decoder is non-valid, that is, when the suppression of the sound output is required. The MUSE signal in which the audio frame synchronizing signal lacks is subjected to a decoding processing in the above mentioned first MUSE audio decoder of the present invention. As a result, the suppression of the sound output can be freely controlled at the output device side of the MUSE signal, and the suppressing operation can be rapidly and accurately performed. Accordingly, a MUSE transmission system capable of suppressing a noise can be provided.

In the second MUSE audio decoder of the present invention, in order to judge the necessity of the suppression of the sound output at an earlier stage, the state of the audio frame synchronism is monitored at the previous stage of the time-axis expansion processing, and the suppression control of the sound output is carried out in accordance with the monitored state to thereby control the noise.

In the second MUSE transmission system of the present invention, the output device of the MUSE signal is controlled to perform such an output operation with respect to the MUSE audio decoder that at least audio frame synchronizing signal lacks in the audio/independent data portion of the MUSE signal during a period when the audio decoder is non-valid, that is, when the suppression of the sound output is required. The MUSE signal in which the audio frame synchronizing signal lacks is subjected to a decoding processing in the above mentioned second MUSE audio decoder of the present invention. As a result, the suppression of the sound output can be freely controlled at the output device side of the MUSE signal, and the suppressing operation can be rapidly and accurately performed. Accordingly, a MUSE transmission system capable of suppressing a noise can be provided.

In the third MUSE audio decoder of the present invention, in order to judge the necessity of the sound suppression at a further earlier stage of the audio decode processing in the MUSE decoder, that is, at the stage where the audio/independent data which is ternary multiplexed on the MUSE signal is subjected to a ternary identification to convert the ternary 2-samples to binary 3-bit data, it is identified whether the continuity of the sample of median of the ternary values which is not defined in the conversion rule is continuously detected for a predetermined period or not. Then, the suppression of the output sound is carried out on the basis of this identification result, thereby effectively preventing the output of the noise.

In the third MUSE transmission system of the present invention, the output device of the MUSE signal serves to output the MUSE signal with respect to the MUSE audio decoder while at least an audio/independent data portion on the MUSE signal during a period when the audio data is non-valid, that is, when the suppression of the sound output is required, is uniformly equalized to the median of the ternary values, that is, is set to a level substantially equal to a gray level of a video signal. The MUSE signal containing the audio/independent data portion whose level is equalized to the gray level is subjected to the decoding processing in the above mentioned third MUSE audio decoder. As a result, the suppression of the sound output can be freely controlled at the output device side of the MUSE signal without occurrence of malfunction of the MUSE audio decoder, and the suppression of the sound output, that is, the prevention of the noise output can be surely carried out.

In the accompanying drawings:-
FIG. 1 is a block diagram showing a summarized construction of a MUSE decoder system;
FIG. 2 is a block diagram of a MUSE decoder of a first embodiment of this invention and a MUSE transmission system of a second embodiment of this invention;
FIG. 3 is a diagram showing the bit construction of one frame portion of an audio data;
FIG. 4 is a block diagram showing the operation of a multiplexing-period bit de-interleave circuit in the MUSE audio decoder;
FIG. 5 is a block diagram of a MUSE decoder of a third embodiment of this invention and a MUSE transmission system of a fourth embodiment of this invention;
FIG. 6 is a block diagram of a MUSE decoder and a MUSE transmission system of a fifth embodiment of this invention; and
FIG. 7 is a diagram showing a data conversion rule from ternary 2-sample to binary 3-bit data in a MUSE audio transmission system.

Preferred embodiments according to this invention will be described hereunder with reference to the accompanying drawings.

At first, the summarized construction of a MUSE decoder system to which the present invention is applied, is explained hereinbelow.

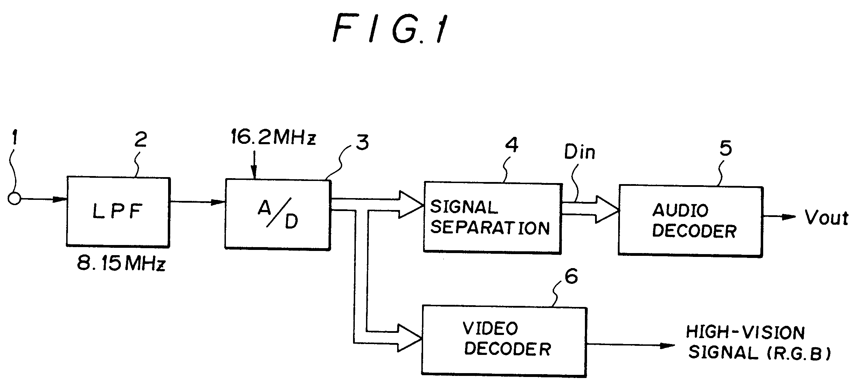

In FIG. 1, a MUSE decoder system is provided with a MUSE signal input terminal 1, a 8.15 MHz LPF (low-pass filter) 2, an A/D converter 3, a signal separation circuit 4, an audio decoder 5 and a video decoder 6. In this MUSE decoder system, an analog MUSE signal which is transmitted from the transmission side, is input to the MUSE signal input terminal 1, then passed through the 8.15 MHz LPF (low-pass filter) 2 so that a high-frequency noise is removed, and then subjected to A/D conversion at a transmission clock rate of 16.2 MHz in the A/D converter 3. The digitalized MUSE signal is subjected to a decoding processing in the video decoder 6 and output as R, G and B high-vision video signals. On the other hand, the digitalized MUSE signal is supplied to the signal separation circuit 4. The signal separation circuit 4 serves to separate (extract) audio/independent data Din contained in the MUSE signal, and then transmit Din to the audio decoder 5. The audio decoder 5 serves to decode the audio/independent data Din through a processing as described later and output an output audio signal Vout.

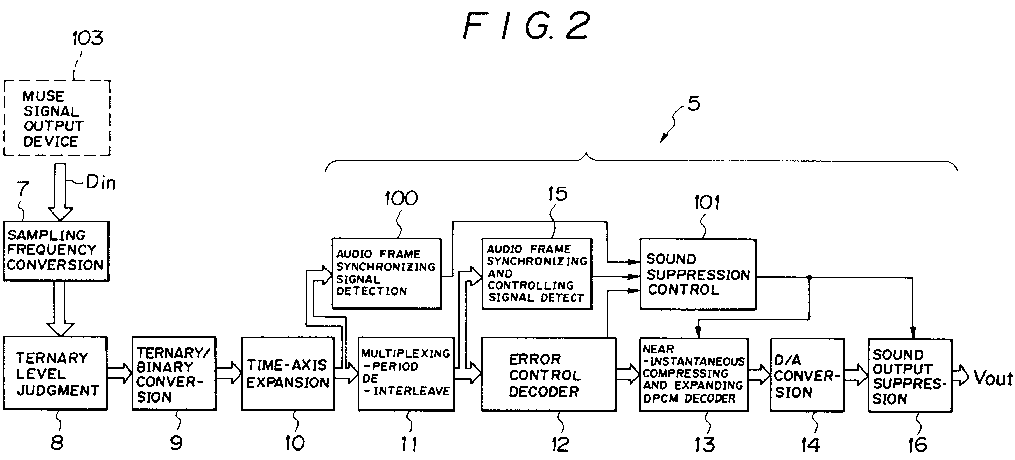

FIG. 2 is a block diagram of a MUSE transmission system as a first embodiment of this invention. In FIG. 2, a MUSE audio decoder is provided with a sampling frequency conversion circuit 7, a ternary level judgment circuit 8, a ternary/binary conversion circuit 9, a time-axis expanding circuit 10, a circuit 11 for de-interleave within the multiplexing period (hereinafter referred to as "multiplexing-period de-interleave circuit 11"), an error control decode circuit 12, a near-instantaneous compressing and expanding DPCM decoder 13, a D/A converter 14, an audio frame synchronizing and controlling signal detection circuit 15 and a sound output suppressing circuit 16.

In FIG. 2, the audio/independent signal Din is converted into a sampling frequency of 12.5 MHz in the sampling frequency conversion circuit 7, and then it is subjected to a ternary level judgment in the ternary level judgment circuit 8. That is, since the audio signal to be transmitted is converted to a ternary sample in the encoder at the transmission side to lower a sample transmission rate, the level judgment as described above is made to enable a processing of the ternary/binary conversion circuit 9 at the next stage of the ternary level judgment circuit 8. The output data of the ternary level judgment circuit 8 is converted into a binary data on the basis of a predetermined conversion rule in the ternary/binary conversion circuit 9, and then supplied to the time-axis expanding circuit 10.

The time-axis expanding circuit 10 serves to expand the audio/independent data on time axis. That is, since the audio/independent data is compressed on time axis in the encoder at the transmission side so as to be accommodated within a vertical retrace line period to perform the multiplexing thereof to the video signal, it is restored to the original audio/independent transmission rate (1.35 MHz) through the converse processing in the time-axis expanding circuit 10. The output data of the time-axis expanding circuit 10 is subjected to a de-interleave processing between audio frames within a multiplexing period in the multiplexing-period de-interleave circuit 11, and then supplied to then error control decode circuit 12.

The error control decode circuit 12 further conducts the de-interleave processing within one frame of the audio/independent data to perform error detection, correction and amendment for the audio/independent data. The output data of the error control decoder circuit 12 is transmitted to the near-instantaneous compressing and expanding DPCM decoder 13.

The near-instantaneous compressing and expanding DPCM decoder 13 serves to decode an audio data which has been subjected to DANCE. The output data of the near-instantaneous compressing and expanding DPCM decoder 13 is transmitted to the D/A converter 14. The D/A converter 14 serves to convert to an analog signal the audio/independent data which has been subjected to the above processings, and output the converted analog signal.

The sound output suppressing circuit 16 is provided at the output stage of the D/A converter 14. In the sound output suppressing circuit 16 is formed a loop which is controlled by the audio frame synchronizing and controlling signal detection circuit 15 to which the output of the multiplexing-period de-interleave circuit 11 is input.

The MUSE audio decoder of the first embodiment is especially provided with an audio frame synchronizing signal detection circuit 100 and a sound suppression control circuit 101. Therefore, in the first embodiment, the output data of the time-axis expanding circuit 10, that is, the audio/independent data at the input stage of the multiplexing-period de-interleave circuit 11, which need relatively long processing time, is extracted by the audio frame synchronizing signal detection circuit 100, and at this stage the presence of the audio frame synchronizing signal in the audio/independent data is detected.

The audio frame synchronizing signal detection circuit 100 serves to detect the presence of the audio frame synchronizing signal in the audio/independent data at the stage before the processing of the multiplexing-period de-interleave circuit 11, and output a detection signal to the sound suppression control circuit 101 when no audio frame synchronizing signal exists over a predetermined number of frames. The sound suppression control circuit 101 controls the sound output suppression circuit 16 in response to the detection signal from the audio frame synchronizing signal detection circuit 100. The sound output suppression circuit 16 serves to attenuate the level (amplitude) of an audio output signal at this time. In this embodiment, the sound output suppression circuit 16 is disposed at the next stage of the D/A conversion circuit 14, however, it may be disposed at the previous stage of the D/A conversion circuit 14 if the same function is achieved. Consequently, a noise can be prevented from being transmitted to an element to be connected to the audio decoder 5 (for example, a power amplifier).

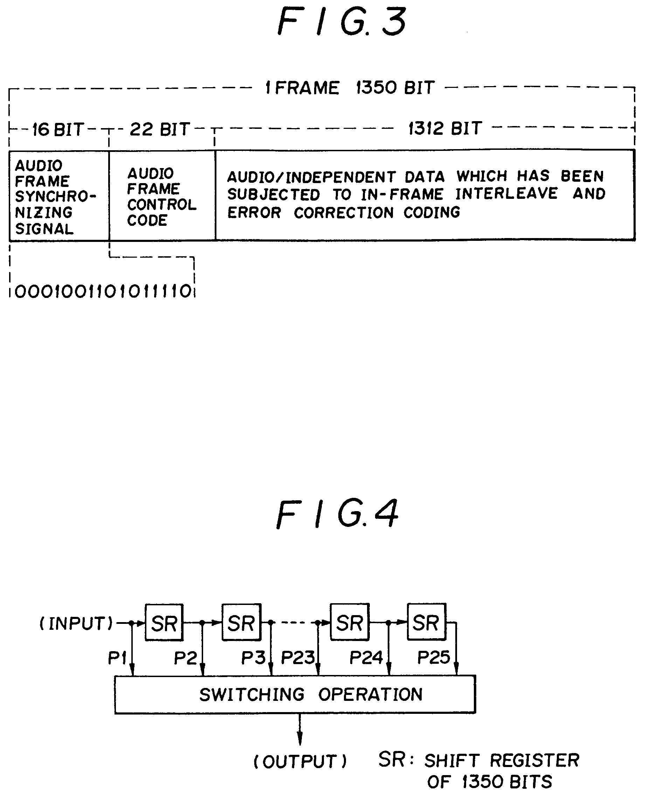

FIG. 3 shows the bit construction of one frame of audio data, and FIG. 4 shows the operation of the multiplexing-period de-interleave circuit 11.

A switching operation of FIG. 4 is as follows. Namely, the head of each field of the MUSE signal is set to P1, and subsequently the switching operation is carried out every clock (frequency of 1.35 MHz) in the order of P2, P3, .., P25. That is, the multiplexing-period de-interleave is carried out over 25 blocks each including 1350 bits (that is, 1 ms), and thus it is delayed with an average delay time of 12.5 ms. In addition, the same audio frame synchronizing signal as shown in FIG. 3 appears every frame period of 1350 bits, and thus the same pattern signal appears before and after the de-interleave processing. As is apparent from the foregoing, this embodiment has an advantage that the audio frame synchronizing signal can be detected at an earlier stage by 12.5 ms on the average in comparison with the prior art. Accordingly, the out-of-synchronism of the audio frame over plural frames is detected to suppress the sound output with sufficient time.

The second embodiment of this invention discloses a MUSE transmission system capable of more effectively using the MUSE decoder of the first embodiment.

As shown in FIG. 2, this MUSE transmission system includes a MUSE signal output device 103 and the MUSE decoder including the audio decoder 5 of the first embodiment (see FIG. 1).

The MUSE signal output device 103 is so designed as to output the MUSE signal in which at least audio frame synchronizing signal is removed from the audio/independent data in the MUSE signal during a period required for the suppression of the amplitude of an output audio signal. The period required for the suppression of the sound output (the amplitude of the audio signal) corresponds to, for example, a particular reproduction time for a still picture when the MUSE transmission system is used for a video disk player.

As described above, the MUSE signal from which the audio frame synchronizing signal is intentionally removed is transmitted from the MUSE signal output device 103 side to the audio decoder 5 side, whereby the suppression of the noise can be performed without providing a special control signal.

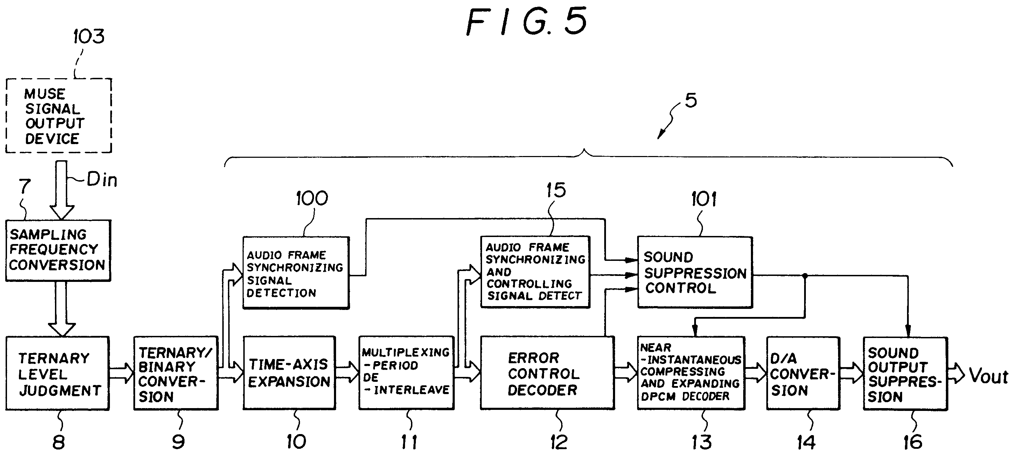

FIG. 5 is a block diagram showing a third embodiment of this invention. In FIG. 5, the same elements as those in FIG. 2, carry the same reference numerals, and the explanations thereof are omitted.

In FIG. 5, the audio frame synchronizing signal detection circuit 100 is coupled to the ternary/binary conversion circuit 9. Therefore, the audio/independent data at the input stage of the time-axis expanding circuit 10 is extracted by the audio frame synchronizing signal detection circuit 100, and at this stage the presence of the audio frame synchronizing signal in the audio/independent data is detected.

With this construction, the audio frame synchronizing signal detection circuit 100 serves to detect the presence of the audio frame synchronizing signal in the audio/independent data at a stage before it is subjected to a processing in the time-axis expanding circuit 10, and output a detection signal to the sound suppression control circuit 101 when no audio frame synchronizing signal exists. The sound suppression control circuit 101 serves to control the sound output suppression circuit 16 in response to the detection signal from the audio frame synchronizing signal detection circuit 100, and attenuate the audio output signal level at this time, thereby preventing the output of a noise.

In FIG. 5, through the time-axis expansion processing of the time-axis expanding circuit 10, the audio/independent data which is compressed and multiplexed on time axis every vertical retrace line period of each field of the MUSE signal is converted to a continuous bit stream of 1.35 Mbps. Therefore, the third embodiment has an advantage that the audio frame synchronizing signal can be detected at an earlier stage by about a half field period (about 8.3 ms) than the first embodiment.

The fourth embodiment of this invention is a MUSE transmission system capable of more effectively using the MUSE decoder of the third embodiment.

As shown in FIG. 5, the MUSE transmission system includes the MUSE signal output device 103 and the MUSE decoder including the audio decoder 5 of the first embodiment (see FIG. 1).

In FIG. 5, the MUSE signal output device 103 is so designed as to output the MUSE signal in which at least audio frame synchronizing signal is removed from the audio/independent data in the MUSE signal during a period required for the suppression of the amplitude of an output audio signal. The period required for the suppression of the sound output (the amplitude of the audio signal) corresponds to, for example, a particular reproduction time for a still picture when the MUSE transmission system is used for a video disk player.

As described above, the MUSE signal from which the audio frame synchronizing signal is intentionally removed is transmitted from the MUSE signal output device 103 side to the audio decoder 5 side, whereby the suppression of the noise can be performed without providing a special control signal.

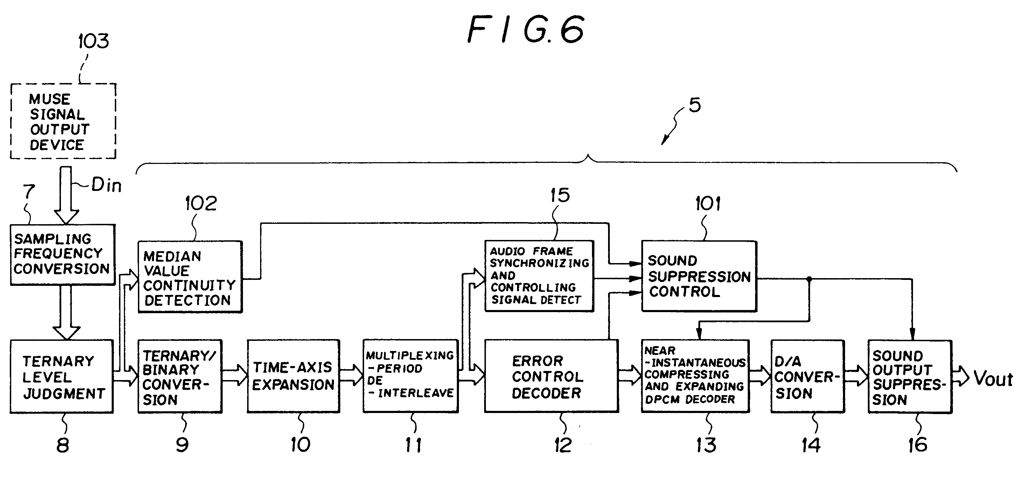

FIG. 6 is a block diagram showing a fifth embodiment of this invention. The same elements as those in FIG. 2, carry the same reference numerals, and the explanations thereof are omitted.

In FIG. 6, the fifth embodiment is especially provided with a median value continuity detection circuit 102, which is coupled to the ternary level judgement circuit 8. Therefore, the validity of the data is detected at the stage where the audio/independent data is a ternary signal which is compressed and multiplexed on time axis on the MUSE signal, and it is used for the suppression control of the sound output.

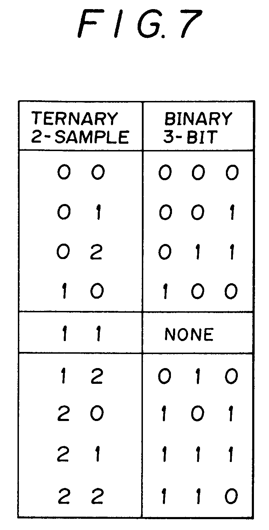

FIG. 7 shows a data conversion rule for ternary 2-sample to binary 3-bit in the MUSE audio transmission system. In order to minimize the affection of a transmission error of ternary samples, the continuous two samples of the median of the ternary values (that is, "1") are not defined in the conversion rule. Therefore, by detecting the continuity of the ternary two samples (1,1), which are not defined in the conversion rule by the median value continuity detection circuit 102, the non-validity of the audio/independent data can be judged. That is, the embodiment of FIG. 6 has an advantage that the suppression of the sound output can be performed irrespective of information in the audio frame such as the audio frame synchronizing signal.

The median of the ternary values is also a gray level which is the median in MUSE signal level. Therefore, when the suppression of the sound output is carried out in this embodiment, a MUSE transmission system is so constructed that the MUSE signal level during at least an audio/independent data multiplexing period of each field is set to the gray level serving as the median of the MUSE signal level and output during a period required for the suppression of the sound output. This processing is performed irrespective of the data in the audio frame, so that it can be easily carried out using no complicated signal encoding processing. When no video decoding is also required, the output signal may be merely set to a non-signal state. This is because the state where the input is in a non-signal state in the MUSE decoder is ordinarily processed as a median by a clamp function, and thus the sound output is necessarily suppressed according to this method. In addition, even when the input of the MUSE signal is rapidly interrupted to the MUSE decoder or no MUSE signal is connected to the MUSE decoder, the sound output can be suppressed in the same operation principle as described, and thus this is preferable.

This embodiment is applicable in combination of any one of the first and third embodiments, and in this case the suppression control of the sound output can be more surely performed than when each of the embodiments is carried out singly.

As described above, according to the present embodiments, the state of the audio/independent data is monitored at an early stage of the signal processing of the audio/independent data, and the suppression of the sound output is performed in accordance with the monitored state, so that the noise output can be surely prevented.

## Claims

1. A MUSE audio decoder (5) for decoding an audio signal contained in a MUSE signal, characterized in that said MUSE audio decoder comprises:
a multiplexing-period bit de-interleave processing unit (11);
a synchronism-state detection unit (100) for detecting an out-of-synchronism state of an audio frame at a previous stage of said multiplexing-period bit de-interleave processing unit; and
a sound output suppressing unit (16) for suppressing the amplitude of an output audio signal of said MUSE audio decoder on the basis of a detection output signal of said synchronism-state detection unit.

2. A MUSE audio decoder (5) as claimed in claim 1, characterized in that said MUSE audio decoder further comprises a time-axis expansion processing unit (10), said synchronism-state detection unit (100) being disposed at a next stage of said time-axis expansion processing unit.

3. A MUSE transmission system characterized in that said MUSE transmission system comprises:
a MUSE signal output device (103) for outputting a MUSE signal in which at least audio frame synchronizing signal is removed from an audio/independent data of the MUSE signal during a period required for suppression of the amplitude of an audio signal contained in the MUSE signal; and
a MUSE audio decoder (5) for decoding the audio signal,
said MUSE audio decoder comprising:
a multiplexing-period bit de-interleave processing unit (11);
a synchronism-state detection unit (100) for detecting an out-of-synchronism state of an audio frame at a previous stage of said multiplexing-period bit de-interleave processing unit; and
a sound output suppressing unit (16) for suppressing the amplitude of an output audio signal of said MUSE audio decoder on the basis of a detection output signal of said synchronism-state detection unit.

4. A MUSE audio decoder (5) for decoding an audio signal contained in a MUSE signal, characterized in that said MUSE audio decoder comprises:
a time-axis expansion processing unit (10);
a synchronism-state detection unit (100) for detecting an out-of-synchronism state of an audio frame at a previous stage of said time-axis expansion processing unit; and
a sound output suppressing unit (16) for suppressing the amplitude of an output audio signal of said MUSE audio decoder on the basis of a detection output signal of said synchronism-state detection unit.

5. A MUSE audio decoder (5) as claimed in claim 4, characterized in that said MUSE audio decoder further comprises a ternary/binary conversion unit (9), said synchronism-state detection unit (100) being disposed at a next stage of said ternary/binary conversion unit.

6. A MUSE transmission system characterized in that said MUSE transmission system comprises:
a MUSE signal output device (103) for outputting a MUSE signal in which at least audio frame synchronizing signal is removed from an audio/independent data in the MUSE signal during a period required for suppression of the amplitude of an audio signal contained in the MUSE signal; and
a MUSE audio decoder (5) for decoding the audio signal,
said MUSE audio decoder comprising:
a time-axis expansion processing unit (10);
a synchronism-state detection unit (100) for detecting an out-of-synchronism state of an audio frame at a previous stage of said time-axis expansion processing unit; and
a sound output suppressing unit (16) for suppressing the amplitude of an output audio signal of said MUSE audio decoder on the basis of a detection output signal of said synchronism-state detection unit.

7. A MUSE audio decoder (5) for decoding an audio signal contained in a MUSE signal, characterized in that said MUSE audio decoder comprises:
a ternary/binary conversion unit (9);
an invalid-signal detection unit (102) for detecting that a ternary pattern signal which is not defined in a ternary/binary conversion rule continuously appears over a predetermined period at a previous stage of said ternary/binary conversion unit; and
a sound output suppressing unit (16) for suppressing the amplitude of an output audio signal of said MUSE audio decoder on the basis of a detection output signal of the invalid-signal detection unit.

8. A MUSE audio decoder (5) as claimed in claim 7, characterized in that said MUSE audio decoder further comprises a ternary level judgement unit (8), said invalid-signal detection unit (102) being disposed at a next stage of said ternary level judgement unit.

9. A MUSE transmission system characterized in that said MUSE transmission system comprises:
a MUSE signal output device (103) for outputting as a gray level a signal level of an audio/independent data portion in a MUSE signal during a period required for suppression of the amplitude of an audio signal contained in the MUSE signal; and
a MUSE audio decoder (5) for decoding the audio signal,
said MUSE audio decoder comprising:
a ternary/binary conversion unit (9);
an invalid-signal detection unit (102) for detecting that a ternary pattern signal which is not defined in a ternary/binary conversion rule continuously appears over a predetermined period at a previous stage of said ternary/binary conversion unit; and
a sound output suppressing unit (16) for suppressing the amplitude of an output audio signal of said MUSE audio decoder on the basis of a detection output signal of the invalid-signal detection unit.
